(19) **Europäisches Patentamt / European Patent Office / Office européen des brevets**

(11) **EP 1 677 315 B1**

(12) **EUROPÄISCHE PATENTSCHRIFT**

(45) Veröffentlichungstag und Bekanntmachung des Hinweises auf die Patenterteilung:
**27.01.2010 Patentblatt 2010/04**

(51) Int Cl.:
*G21C 19/307* *(2006.01)*    *G21C 7/22* *(2006.01)*

(21) Anmeldenummer: **06005253.7**

(22) Anmeldetag: **19.10.1998**

(54) **Verfahren und Vorrichtung zum Abtrennen von Bor aus dem Primärkühlkreis eines Kernkraftwerks**

Method and device for separating boron from the primary cooling circuit of a nuclear power station

Procédé et dispositif destinés à la séparation du Bor provenant d'un circuit de refroidissement primaire d'une centrale nucléaire

(84) Benannte Vertragsstaaten:
**BE CH ES FI FR GB LI NL SE**

(30) Priorität: **24.10.1997 DE 19747076**

(43) Veröffentlichungstag der Anmeldung:
**05.07.2006 Patentblatt 2006/27**

(62) Dokumentnummer(n) der früheren Anmeldung(en) nach Art. 76 EPÜ:
**98119708.0 / 0 911 834**

(73) Patentinhaber: **EnBW Kraftwerke AG**
**76661 Philippsburg (DE)**

(72) Erfinder:
• **Rühle, Wilfried, Dr.**
 **69214 Eppelheim (DE)**

• **Enkler, Günther**
 **68753 Waghäusel (DE)**
• **Bolz, Michael, Dr.**
 **76689 Karlsdorf (DE)**

(74) Vertreter: **Jany, Peter et al**
**Patentanwalt**
**Karlstrasse 87**
**76137 Karlsruhe (DE)**

(56) Entgegenhaltungen:
**EP-A- 0 342 168     DE-A- 2 326 152**
**DE-A- 2 830 972     FR-A- 2 641 539**
**US-A- 4 675 090     US-A- 5 082 618**
**US-A- 5 589 071**

EP 1 677 315 B1

**Beschreibung**

Die Erfindung betrifft ein Verfahren und eine Vorrichtung zum Abtrennen von Bor aus dem Primärkühlkreis eines Kernkraftwerks, insbesondere eines Druckwasserreaktors.

In Kernkraftwerken wird mittels der neutroneninduzierten Kernspaltung Energie gewonnen. Das in dem Primärkühlkreis enthaltene Wasser dient dabei sowohl als Kühlmittel zur Abführung der Reaktionswärme als auch als Moderator zum Thermalisieren der für die Aufrechterhaltung der Kettenreaktion erforderlichen Neutronen.

Zur Beeinflussung der Zahl der thermalisierten Neutronen und damit zur Regelung der Leistung des Reaktors durch Beeinflussung der Kettenreaktion werden dem Kühlwasser neutronenentziehende Substanzen beigegeben. Eine bevorzugte Substanz zur Bindung der Überschußreaktivität ist das neutronenphysikalisch wirksame Isotop $^{10}$B, das in Form von an $^{10}$B angereicherter Borsäure (B(OH)$_3$) im Primärkühlkreis vorliegt. Dieses Isotop hat einen großen Neutroneneinfangquerschnitt.

Die Zugabe von Borsäure hat jedoch den Nachteil, daß im Primärkühlkreis der pH-Wert abgesenkt wird. Um den pH-Wert in den zulässigen Wertebereich anzuheben und die pHabsenkende Wirkung der Borsäure zu kompensieren, wird dem Primärkühlkreis isotopenreines $^7$Li in Form von LiOH zugegeben. Die nachfolgenden Ausführungen gelten daher, soweit von $^7$Li die Rede ist, sinngemäß gleichzeitig für LiOH.

Aufgrund der Tatsache, daß die Aktivität in einem Reaktor nach einer Beschickung mit neuem Kernbrennstoff während des ca. einjährigen Zyklus abnimmt, ist zu Beginn eines Zyklus eine höhere Borsäurekonzentration als am Zyklusende erforderlich, um die Überschußreaktivität zu binden. Die Borsäurekonzentration muß daher während der Zyklusdauer von ca. 1200 ppm auf ca. 0 ppm reduziert werden. Damit der zulässige pH-Bereich bzw. die maximal zulässige Lithiumkonzentration eingehalten wird, muß begleitend auch die Lithiumkonzentration beeinflußt werden. Dabei gibt es unterschiedliche Lithium-Bor-Fahrweisen eines Reaktors.

So kann beispielsweise über die Zyklusdauer der pH-Wert konstant gehalten werden, wobei die Borsäure- und die Lithiumkonzentration während des Zyklus gleichmäßig abnehmen. Eine andere Variante besteht darin, daß während eines Großteils des Zyklus zunächst bei konstanter Lithiumkonzentration die Borsäurekonzentration reduziert und erst gegen Ende des Zyklus auch die Lithiumkonzentration verringert wird. Die Lithiumhydroxidkonzentration liegt in der Regel zu Beginn eines Zyklus zwischen 1,5 und 2,5 ppm und gegen Ende des Zyklus zwischen 0 und 1 ppm. Daraus ergibt sich das Erfordernis, während eines Zyklus nicht nur die Borsäurekonzentration, sondern auch die Lithiumhydroxidkonzentration zu reduzieren.

Hinzu kommt, daß aufgrund der Neutroneneinfangreaktion des $^{10}$B der Reaktor im Betrieb selbst $^7$Li produziert, das ebenfalls entzogen werden muß.

Aufgrund der neutronenphysikalischen und chemischen Anforderungen an einen Reaktor ist der gebräuchliche $^7$Li-Haushalt während der Zyklusdauer einer Brennstabbeschikkung daher wie folgt.

a) Zu Beginn eines Zyklus wird der Primärkühlkreis mit auf dem Markt erworbenen Lithium beladen, um die $^7$Li-Anfangskonzentration der zu diesem Zeitpunkt hohen Borkonzentration anzupassen.

b) In der ersten Zyklushälfte wird durch den Neutroneneinfang des $^{10}$B das $^7$Li im Überschuß produziert. Dieses erbrütete $^7$Li muß ebenso wie das aufgrund der abnehmenden Borsäurekonzentration überschüssige $^7$Li dem Primärkühlkreis entzogen werden. Dabei ist es erstrebenswert, die $^7$Li-Konzentration im Kühlmittel möglichst konstant zu halten, damit sich der pH-Wert und folglich das Redoxpotential nicht oder nicht diskontinuierlich ändern, wodurch die Mobilisierung radioaktiver Korrosionsprodukte verstärkt würde.

c) In der zweiten Zyklushälfte ist zur Absenkung der Borsäurekonzentration eine hohe Kühlmittelaustauschrate erforderlich. Dabei geht bei den nach dem Stand der Technik eingesetzten Methoden $^7$Li in der Kühlmittelaufbereitung verloren. Dieses verlorene $^7$Li wird wiederum durch hinzugekauftes, neues $^7$Li ersetzt.

d) Druckwasserreaktoren werden auch zur kurzfristigen Abdeckung von Strombedarfsspitzen eingesetzt, insbesondere in Ländern mit hohem Anteil der Kernenerie an der Stromerzeugung. Hierzu muß die Reaktivität eines Reaktors in kurzer Zeit verändert werden. Reaktivitätserhöhung kann durch Erniedrigen der Borsäurekonzentration erreicht werden, wobei zur Konstanthaltung des pH-Wertes in gleichem Maße die Lithiumkonzentration erniedrigt werden muß. Umgekehrt kann die Reaktivität des Reaktors durch Erhöhen der Borsäurekonzentration erniedrigt werden, wobei auch hier zur Konstanthaltung des pH-Wertes in gleichem Maße die Lithiumkonzentration erhöht werden muß. Diese Betriebsweise, bei der die Reaktivität in kurzer Zeit erhöht oder erniedrigt wird, wird als Lastfolgebetrieb bekennzeichnet.

Nach dem Stand der Technik werden zum Entzug des $^7$Li Ionenaustauschfilter eingesetzt. Zusammen mit diesen Ionenaustauschern gelangt das $^7$Li letztendlich in den radioaktiven Abfall. Hierdurch entstehen parallel zu den hohen Zukaufkosten ganz erhebliche Entsorgungskosten. Mit Lithium beladene Ionenaustauscher dienen als ionale und partikuläre Hauptreinigungsfilter im Primärkühlkreis. Es ist erforderlich, das im intermittierenden Betrieb betriebene Lithiumentzugsfilter auszutauschen, wenn es seine Lithiumbeladungsgrenze erreicht hat, und es dann als Hauptreinigungsfilter weiter zu betreiben. Das vorherige Hauptreinigungsfilter wird dabei verworfen, obwohl es seiner Aufgabe als Hauptreinigungsfilter noch gerecht werden könnte. Durch die Lithiumsättigung der Ionenaustauscher werden die Entsorgungskosten somit weiter erhöht.

Ferner ist es in Fällen, in denen die Harze des Hauptreinigungsfilters, beispielsweise wegen ihrer chemischen Erschöpfung, ausgetauscht werden müssen, erforderlich, auch das als Lithiumentzugsfilter benutzte Mischbettfilter mit neuem, hinzugekauften Lithium bis zur Sättigung zu beladen und dann als Hauptreinigungsfilter für die Kühlwasserreinigung einzusetzen. Die Harzfüllung des alten Hauptreinigungsfilters wird verworfen, das Filter mit neuen Filterharzen gefüllt und dann als Lithiumentzugsfilter verwendet.

Die nach dem Stand der Technik eingesetzten Ionenaustauschfilter sind daher zusammengefaßt sehr unwirtschaftlich, da ständig $^7$Li zu hohen Kosten hinzugekauft und mit sehr erheblichen Entsorgungskosten als radioaktiver Abfall entsorgt wird. Diese Verfahrensweise wurde von der Fachwelt für erforderlich gehalten, um eine zuverlässige Regelung der $^7$Li-Konzentration zu erzielen.

Im Stand der Technik wurden große Anstrengungen unternommen, um die durch das $^7$Li verursachten, erheblichen Kosten zu reduzieren. In einer in diesem Zusammenhang vor kurzem erstellten Studie der Energieversorgungsunternehmen wurden Möglichkeiten zur Kosteneinsparung untersucht. Im Ergebnis wurde vorgeschlagen, unter Anwendung der bekannten Ionenaustauscher das Management der Lithiumdosierung zu optimieren. Auf diese Weise lassen sich jedoch die oben beschriebenen, in der bisher eingesetzten Technologie begründeten Nachteile nicht entscheidend reduzieren.

Aus den vorstehend geschilderten Zusammenhängen ist ersichtlich, daß bei einem Kernkraftwerk das Erfordernis besteht, die Borsäurekonzentration zu beeinflussen. Dies erfolgt nach dem Stand der Technik durch Austausch von Kühlmittel gegen vollentsalztes Wasser und Rückgewinnung der Borsäure durch Verdampfung, wodurch hohe Kosten entstehen.

Es wurde vorgeschlagen, das $^7$Li mittels eines Elektrodialyseverfahrens abzutrennen. Unter Elektrodialyse versteht man einen Prozeß, bei dem unter Einfluß eines elektrischen Felds mit Hilfe ionenselektiver Membranen Ionen aus einer Lösung entfernt werden. Ein Elektrodialyseverfahren ist dadurch gekennzeichnet, daß die Stromleitung nur über einen Ionentransport erfolgt. Eine Entgasung der Produktkammer ist nicht erforderlich, da keine begleitende Gasentwicklung eintritt. Die Elektrodialyse kann ohne Zusatz von Additiven durchgeführt werden, und Spurenelemente werden mit dem abgetrennten Lithium in den Reaktor zurückgeführt.

Die Elektrodialyse ist daher prinzipiell zum Abtrennen von $^7$Li und Bor aus dem Primärkühlkreis in vorteilhafter Weise geeignet. Wenn die dort eingesetzten Anionenaustauschermembranen aufgrund ihrer Beschaffenheit aber nicht nur Hydroxidionen, sondern auch Borationen passieren lassen, was eventuell auch aufgrund einer Alterungserscheinung eintreten kann, kann sich bei manchen Elektrodialysekonfigurationen der Nachteil ergeben, daß es beim Abtrennen von $^7$Li zu einer unerwünschten Entborierung des Primärkühlmittels kommen kann. Die Elektrodialyse ist daher nicht uneingeschränkt in allen, insbesondere einfachen, Konfigurationen zum Abtrennen von $^7$Li aus dem Primärkühlkreis geeignet.

Nach dem Stand der Technik wird die Konzentration an Borsäure durch Kühlmittelaustausch erniedrigt. Dazu werden täglich ca. 10 m$^3$ Primärkühlmittel durch Deionat ersetzt. Das entzogene Primärkühlmittel wird über ein separates Mischbettfilter zur Abtrennung radioaktiver Korrosionsprodukte und des Lithiums geleitet und anschließend wird die Borsäure durch Verdampfen des Wassers auf ca. 7000 mg/kg aufkonzentriert. In dieser Form wird die Borsäure bis zum nächsten Zyklus gelagert. Der Gehalt an Lithium wird dabei durch den diskontinuierlichen Einsatz eines Ionenaustauscherfilters, das eigens zu diesem Zweck bereitsteht, konstant gehalten. Ist dessen Aufnahmekapazität für Lithium erschöpft, muß es ersetzt werden, wobei das aufgenommene teure [7]Lithium verlorengeht. Diese Betriebsweisen sind verfahrenstechnisch aufwendig, erfordern einen hohen Platzbedarf, sind abfallintensiv und teuer.

Aus dem Dokument DE-OS 2830972 ist das Abtrennen von $^7$Li und Bor aus einem Reaktorkühlmittel mittels eines Membranelektrolyseverfahrens bekannt. Bei dem bekannten Verfahren wird die ionisierte Lösung von Lithiumhydroxid und Borsäure in drei Ströme aufgeteilt, nämlich einen Teilstrom mit deionisiertem Wasser, einen zweiten Teilstrom mit konzentrierter Borsäure und einen dritten Teilstrom mit konzentrierter Lithiumhydroxidlösung.

Als nachteilig bei diesem Verfahren hat sich der gleichzeitige Entzug von Borsäure und Lithiumhydroxid herausgestellt. Durch den relativ komplexen Aufbau des Moduls mit drei Flüssigkeitsströmen (Vorlage, Anolyt, Katholyt, evtl. Spülung) und der Anordnung der Membranen sind beide Abtrennvorgänge fest aneinander gekoppelt, so daß es beim Entziehen von Lithium immer gleichzeitig auch zu einer Abnahme der Borkonzentration kommt. Dies kann zu einer gefährlichen Zunahme der neutroneninduzierten Kernspaltungen im Reaktor führen, wenn nicht durch Rückführen bzw. Nachdosieren von Borsäure und exakter Regelung die Konzentration an Borsäure konstant gehalten wird.

Durch die bekannte Anordnung entsteht ein Kreislauf, der nahezu deionisiertes Wasser enthält. Deionisiertes Wasser hat den Nachteil, daß es nur eine geringe elektrische Leitfähigkeit besitzt. Um dieses Problem bewältigen zu können, muß die Kammer des Moduls, die deionisiertes Wasser enthält, mit einem Mischbett von Ionenaustauscherharzen gefüllt werden. Hierdurch steigt zwar die Leitfähigkeit, gleichzeitig entsteht aber auch zusätzlicher radioaktiver Abfall, da diese Austauscherharze auch radioaktive Spaltprodukte absorbieren, die zu hohen Strahlenbelastungen führen. Die Regenerierung der Ionenaustauscherharze und besonders der Ionenaustauschermembranen durch Polumkehr kann bei der bekannten Anordnung nicht im kontinuierlichen Betrieb erfolgen, so daß der eigentliche Entzugsprozeß hierzu unterbrochen werden muß.

Der Erfindung liegt unter Berücksichtigung dieses Standes der Technik die Aufgabe zugrunde, ein Verfahren und eine entsprechende Vorrichtung zu schaffen, mit denen es möglich ist, Bor aus dem Primärkühlkreis zu entfernen, ohne dabei radioaktiven Abfall zu erzeugen, und das abgetrennte Bor in relativ konzentrierter Form für den späteren Bedarf zu lagern, um es im Bedarfsfall wieder dem Primärkühlkreis zusetzen zu können.

Die erfindungsgemäße Lösung bei einem Verfahren zum Abtrennen von Bor aus dem Primärkühlkreis eines Kernkraftwerks, insbesondere eines Druckwasserreaktors, besteht darin, daß Kühlwasser aus dem Primärkühlkreis entnommen und durch ein Elektrolysemodul geleitet wird, in dem Bor mittels anionenselektiver Membranen und Membranelektrolyse aus Kühlwasser abgetrennt wird, ohne daß gleichzeitig mittels neben den anionenselektiven Membranen angeordneter kationenselektiver Membranen $^7$Li durch Membranelektrolyse abgetrennt wird, und aus dem Elektrolysemodul austretendes Diluat in den Primärkühlkreis zurückgespeist wird.

Im Rahmen der vorliegenden Erfindung wurde überraschenderweise festgestellt, daß die außerordentlich schwierigen Anforderungen bei einem Kernkraftwerk hinsichtlich Zuverlässigkeit, Betriebssicherheit und Genauigkeit der Regelung der $^7$Li- oder Bor-Konzentration mit dem Verfahren der Membranelektrolyse gelöst werden können, ohne daß, wie von der Fachwelt bisher für erforderlich gehalten wurde, ständig große Mengen $^7$Li hinzugekauft und als radioaktiver Abfall verworfen werden müssen oder auf sonstige Weise große Mengen an radioaktivem Abfall anfallen.

Der Einsatz der Membranelektrolyse in Wässern, die in ihrer Zusammensetzung dem Primärkühlmittel von Druckwasserreaktoren entsprechen, ist ungewöhnlich. Ein typischer Anwendungsfall für die Membranelektrolyse ist die Chlor-Alkali-Elektrolyse. Dort werden Anode und Kathode durch eine Kationenaustauschermembran voneinander getrennt. Eine konzentrierte Kochsalz-Lösung ($NaCl$) fließt dem Anodenraum zu. Unter dem Einfluß des elektrischen Feldes wandern die Natriumionen durch die Kationenaustauschermembran zur Kathode. An der Kathode werden wiederum Hydroniumionen des Wassers zu gasförmigem Wasserstoff reduziert, und es entsteht konzentrierte Natronlauge. Chlorionen werden an der Anode zu elementarem (gasförmigem) Chlor oxidiert. Diese Anwendung konnte großtechnisch erst eingesetzt werden, als es gelungen war, die Anlagen bei sehr hohen Stromstärken (einige tausend $A/m^2$) zu betreiben. Der hohe Energiebedarf beruht auf der durchgeführten Stoffumwandlung und ist durch die erhaltenen Reaktionsprodukte Wasserstoff, Chlorgas und Natronlauge gerechtfertigt.

Im Fall der Membranelektrolyse erfolgt die Dissoziation von Wasser bedingt durch eine Redoxreaktion an den Elektroden. Man beobachtet unter Energieverbrauch die Bildung gasförmiger Nebenprodukte. Bei der Membranelektrolyse als elektrochemischem Membranverfahren zur Abtrennung von Stoffen in ionaler Form findet alternierend ein Ionen- und Elektronentransport statt. Als nachteilig bei der Membranelektrolyse wurde bisher angesehen, daß an den innen liegenden Elektroden eine Gasentwicklung auftritt, so daß dementsprechend eine Entgasung der Produktkammer erforderlich ist. Ferner wurde angenommen, daß die Zugabe von Additiven erforderlich sein kann und daß die in der zu reinigenden Flüssigkeit enthaltenen Spurenelemente auf den Elektroden abgeschieden werden, dort Passivierungsschichten bilden, die Elektroden angreifen oder beim Umpolen ausfallen können. Im Rahmen der Erfindung wurde dagegen gefunden, daß diese Probleme nicht bedeutsam sind.

Bei der erfindungsgemäßen Anwendung ist die Entstehung von Wasserstoff und Sauerstoff eine störende Nebenreaktion, die die Stromausbeute erniedrigt. Lediglich der entstehende Wasserstoff kann einen Teil des Wasserstoffgases ersetzen, das dem Primärkühlmittel ohnehin zugesetzt wird, um das im Reaktorkern entstehende Radiolysegas zu reduzieren. Ebenfalls untypisch sind die relativ niedrigen Salzkonzentrationen und der damit verbundene hohe elektrische Widerstand. Es ist daher überraschend, daß mit der Erfindung die Probleme der vorbekannten Verfahren überwunden werden.

Die erfindungsgemäße Bauweise des Membranenelektrolysemoduls unterscheidet sich vom Stand der Technik. Für den Entzug von Lithiumhydroxid bzw. von Borsäure werden zwei getrennte Module, eines mit einer Kationenaustauschermembran, das andere mit einer Anionenaustauschermembran, eingesetzt, die vollkommen unabhängig voneinander betrieben werden. Damit kann der Lithiumentzug vollkommen unabhängig vom Borentzug gefahren werden, und es kann zu keiner unkontrollierten Reaktivitätssteigerung des Reaktors kommen. Ebenso entfallen aufwendige Regelsysteme. Da dem Primärkühlmittel entweder Borsäure oder Lithiumhydroxid entzogen wird, nimmt die Leitfähigkeit der Lösungen im Modul nicht sonderlich ab. Es kann also auf den Einsatz von Ionenaustauschern zur Steigerung der Leitfähigkeit vollkommen verzichtet werden.

Nachteile, die von einer zusätzlichen Strahlenbelastung durch Anreicherung radioaktiver Spaltprodukte im Modul herrühren, und weitere Probleme, die beim Einfüllen und Entleeren der Ionenaustauscherharze entstehen, entfallen. Durch das Fehlen der Ionenaustauscherharze kommt es zu niedrigen Strömungswiderständen in dem Modul, so daß die Anlage weitgehend druckfrei betrieben werden kann und als Ausführungswerkstoff zum Beispiel Kunststoff zur Anwendung kommen kann. Durch den einfachen Aufbau des Membranelektrolysemoduls kann problemlos die Polarität der Elektroden und der Zustrom von Diluatlösung und Konzentratlösung vertauscht werden, und somit kann ein Zusetzen (Fouling) der Ionenaustauschermembranen wirkungsvoll verhindert werden.

Die bei der Membranelektrolyse eingesetzten ionenselektiven Membranen haben vorzugsweise eine hohe Ladungsdichte und bestehen heutzutage in der Regel aus Kunststofffilmen, in die ionische Gruppen eingebettet sind. Je nach Ladung der Membranen unterscheidet man Kationenaustauscher- und Anionenaustauscher-Membranen. Die wesentlichen Anforderungen an ionenselektive Membranen sind:

1. Hohe Ionenselektivität, d.h. kationenaktive Membranen sollen möglichst weitgehend undurchlässig für Anionen sein und umgekehrt.

2. Geringer elektrischer Widerstand, d.h. der Transport der Gegenionen durch die Membran hindurch soll mit möglichst geringem Aufwand an elektrischer Energie durchführbar sein.

3. Hohe mechanische Festigkeit, d.h. die Membran soll in gewissem Umfang flexibel und bruchfest sein und somit eine lange Lebensdauer haben.

4. Hohe chemische Beständigkeit, d.h. widerstandsfähig gegen Hydrolyse und oxydative und andere chemische Einflüsse.

Eine hohe chemische Selektivität der ionenselektiven Membran, d.h. hinsichtlich der Atom- bzw. Molekülart, ist dagegen, anders als im Fall der Elektrodialyse, bei der Membranelektrolyse in der Regel nicht Voraussetzung.

Die Grundeinheit einer Membranelektroyseanlage besteht aus einer nach dem Plattenwärmeaustauscher- oder auch Filterpressenprinzip aufgebauten Stapelzelle. Bevorzugt sind Mehrfachzellen; das sind Zellen, in denen einer Zelle, in der Flüssigkeit strömt, die die abzutrennende Substanz aufnehmen soll, alternierend eine Zelle folgt, in der die zu behandelnde Flüssigkeit fließt. Die Elektrodenzellen werden hierbei in der Regel nicht für sich getrennt gespült. Weitere Details zur Membranelektrolyse sind der Fachliteratur zu entnehmen.

Überraschenderweise hat sich im Rahmen der Erfindung herausgestellt, daß durch die Anwendung der Membranelektrolyse zum Abtrennen von Bor aus dem Primärkühlkreis Ziele erreicht werden, um die sich die Fachwelt schon lange bemüht hat. Es ist mit diesem Verfahren möglich, das Bor bzw. Borsäure in aufkonzentrierter Form abzutrennen, zu speichern und im Bedarfsfall dem Primärkühlkreis wieder zuzusetzen. Dies kann im Fall von Lastfolgebetrieb durch einfaches Umkehren der Polung an den Elektroden geschehen. Damit sind erhebliche Vorteile in verfahrenstechnischer Hinsicht sowie in bezug auf die Betriebskosten des Kraftwerks verbunden. Die Abtrennung von Borsäure kann selektiv erfolgen, wobei die gewünschte Spezies in ausreichender Reinheit abgetrennt wird und es infolge des Lithiumentzugs nicht zu einer Entborierung des Primärkühlmittels kommt. Die Konzentrate lassen sich hoch anreichern, die Chemikalien in kleinen Volumen speichern und den Sicherheitsbedingungen kann entsprochen werden.

Um dabei besonders gute Ergebnisse hinsichtlich der Borabtrennung, der Betriebssicherheit und der Kostenminimierung zu erhalten, werden bevorzugt die nachfolgenden Maßnahmen einzeln oder in Kombination miteinander eingesetzt.

Nach einem ersten vorteilhaften Merkmal kann vorgesehen sein, daß das Elektrolysemodul bipolare Elektroden aufweist. Ein wesentliches Merkmal der Elektrolyse mit bipolaren Elektroden ist, daß mit nur zwei elektrischen Ableitungen ein Stapel mit mehreren Kammern aufgebaut werden kann. Dabei kann vorteilerhafterweise vorgesehen sein, daß das Elektrolysemodul eine alternierende Folge von Kationenaustauschermembranen und bipolaren Elektroden oder von Anionenaustauschermembranen und bipolaren Elektroden aufweist. Als bipolare Elektroden können beispielsweise Titanbleche, deren Oberfläche mit Edelmetalloxiden (zum Beispiel Platin oder Iridium) beschichtet sind, eingesetzt werden.

Als besonders vorteilhaft haben sich im Rahmen der Erfindung zur Abtrennung von Bor aus dem Primärkühlkreis Membranen herausgestellt, die eine mikroheterogene und/oder eine Interpolymermorphologie aufweisen. Damit soll erreicht werden, daß die mechanischen und elektrochemischen Eigenschaften entkoppelt eingestellt werden können. Dementsprechend erfolgt der Aufbau einer Membran aus einem Matrixpolymer, einem Gewebe oder einem Binder, sowie aus einem Polyelektrolyten bzw. einem Ionomer. Dabei wird entsprechend des Grades der Heterogenität der Ionenaustauschermembran zwischen homogenen Membranen, Interpolymermembranen, mikroheterogenen Pfropf- oder Blockcopolymermembranen und heterogenen Membranen unterschieden.

Das polymere Netzwerk kann dabei unterschiedlich aufgebaut sein, um für die meisten Anwendungsfälle ausreichend gute elektrische und mechanische Eigenschaften aufzuweisen. Als ladungsneutrales Matrixpolymer wird üblicherweise Polyvinylchlorid und Polyacrylat eingesetzt. Als weitere Matrixpolymere können noch Polyethylen, Polypropylen oder Polysulfon verwendet werden, wobei nur diese eine chemische Langzeitstabilität unter alkalischen Bedingungen aufweisen.

Bevorzugt wird somit beim erfindungsgemäßen Verfahren als Anionenaustauschermembran eine solche auf Basis von Polyethylen, Polypropylen, Polyetherketon, Polysulfon, Polyphenyloxid- und/oder -sulfid eingesetzt.

Die ionenleitenden Polyelektrolyte einer Anionenaustauschermembran bestehen aus einem Netzwerk mit einer positiven Überschußladung und beweglichen, negativ geladenen Gegenionen. Das Festionengerüst kann durch schwach basische Amino- und Iminogruppen aufgebaut sein, wie auch aus stark basischen Immonium- und quartären Ammonium-Gruppen:

$$-NH_3^+ \qquad -NH_2R^+ \qquad -NR_3^+ \qquad =NR_2^+$$

Besonders bevorzugt weist die im erfindungsgemäßen Verfahren eingesetzte Anionenaustauschermembran Austauschgruppen aus alkyliertem Polyvinylimidazol, Polyvinylpyridin und/oder aklyliertem 1,2-Diazabicy-clo[2.2.2.]octan auf.

Besonders geeignete Membranen sind in der DE 4026154 A1, DE 4211266 A1 und DE 4211267 A1 beschrieben.

Der Typ und die Konzentration an Festionen bestimmt hauptsächlich die Permselektivität und den elektrischen Widerstand der Membran, kann sich aber auch auf die mechanischen Eigenschaften, insbesondere auf die Quellung der Membran aufgrund der Konzentration an Festionen auswirken. Die stark basische quartäre Ammonium-Gruppe ist bei allen pH-Werten dissoziert, während die primäre Ammonium-Gruppe nur schwach dissoziert ist. Aus diesem Grund werden meistens quartäre Ammonium-Gruppen in kommerziellen Anionenaustauschermembranen eingebaut, außer, daß eine Membran mit bestimmten Eigenschaften hergestellt werden soll.

Systeme auf Basis von chlormethyliertem Polystyrol, Styrol/Divinylbenzol-Copolymeren und Styrol/Butadien-Copolymeren unter nachträglicher Quarternisierung mit Trimethylamin finden den häufigsten Einsatz.

Die chemische Langzeitstabilität der Anionenaustauschermembranen kann nur durch folgende Faktoren beeinflußt werden: Zerstörung der Polymermatrix (unzureichende Stabilität des Matrix- oder Interpolymers in alkalischer Lösung), morphologische Veränderung des Systems Festionengerüst/Polymermatrix oder chemischer Abbau der Festionen unter alkalischen oder oxidativen Bedingungen.

Zur Auswahl einer Anionenaustauschermembran können die elektrochemischen, die mechanischen und die chemischen Eigenschaften in gleicher Weise optimiert sein. Bezüglich der mechanischen Eigenschaften kann das Gewebe aus temperatur-, alkali- und oxidationsstabilen Polymeren (Polypropylen, Polyethylen, Polyetherketon) bestehen und als Festladung chemisch stabiles quartäres Ammoniumsalz (Vinylimidazol, 4,4'-Diaza-bicyclo[2.2.2]-octan aufweisen. Geeignete Membranen sind in der DE-A 4421126 beschrieben.

Zur Durchführung des erfindungsgemäßen Verfahrens werden die Elektrolyse-Zellen ohne Einschränkung der Allgemeinheit beispielsweise mit Stromdichten von 1 bis 150 mA/cm$^2$, bevorzugt mit 2 bis 20 mA/cm$^2$ betrieben. Bei den Elektrolyse-Zellen zur Durchführung des erfindungsgemäßen Verfahrens können handelsübliche Kationen- und Anionenaustauschermembranen verwendet werden, die den Kathodenraum vom Anodenraum trennen. Beispiele für Kationenaustauschermembranen sind NEOSEPTA$^{(R)}$ CL-25 T, NEOSEPTA$^{(R)}$ CMS (Tokuyama Soda Co., Japan) und SELEMION$^{(R)}$ CMV (Asahi Glass Co., Japan). Beispiele für Anionenaustauschermembranen sind NEOSEPTA$^{(R)}$ ACH-45 T, NEOSEPTA$^{(R)}$ AMS, SELE-MION$^{(R)}$ AMV, SELEMION$^{(R)}$ AMP und SELEMION$^{(R)}$ AMF. Ohne Einschränkung der Allgemeinheit werden hierfür bevorzugt Austauschermembranen vom Typ NEOSEPTA$^{(R)}$ CMX und AMX der Firma Tokuyama Soda Co., Japan, verwendet. Ohne Einschränkung der Allgemeinheit werden für den Zellstappel bevorzugt Anionenaustauschermembranen vom Typ NEOSEPTA$^{(R)}$ ACM, NEOSEPTA$^{(R)}$ AFN oder NEOSEPTA$^{(R)}$ AM-3 verwendet und Kationenaustauschermembranen vom Typ NEOSEPTA$^{(R)}$ CMS oder NEOSEPTA$^{(R)}$ CM-2.

Bei den NEOSEPTA$^{(R)}$-Membranen der Firma Tokuyama Soda Co., Japan, handelt es sich um mikroheterogene Ionenaustauschermembranen vom Typ Interpolymermembran. Das Grundgerüst wird nach der sogenannten "paste method" aus 100 Teilen PVC-Pulver, 90 Teilen F-Monomer, 10 Teilen Divinylbenzol, 30 Teilen Dioctylphthalat und 1 Teil Benzoylperoxid durch Beschichten eines PVC-Netzes hergestellt. Als F-Monomer werden Styrol bei Kationenaustauschermembranen, Chlormethylstyrol, 4-Vinylpyridin oder 2-Methyl-5-vinylpyridin bei Anionenaustauschermembranen verwendet. Bei den Membranen der Firma Asahi Glass handelt es sich um quasihomogene Ionenaustauschermembranen. Diese werden aus einem Styrol-Vorpolymerisat und einem Styrol/Butadien-Copolymer nach Zusatz von Divinylbenzol auf einem PVC-Netz hergestellt. Die Funktionalisierung erfolgt entweder durch Sulfonierung (CMV) oder durch Chlormethylierung und anschließende Quaternisierung (AMV).

Zur Durchführung der Membranelektrolyse kommen vorzugsweise Kationenaustauschermembranen vom Typ Nafion oder FKF und Anionenaustauschermembranen vom Typ AMX oder FT-DSV in Betracht.

Die Wirksamkeit des erfindungsgemäßen Verfahrens kann erhöht werden, wenn der pH-Wert in den unterschiedlichen Zellen durch Zusatz von Säure bzw. Lauge optimiert wird. Durch Verwendung von Komplexbildnern lassen sich störende Ionen, insbesondere radioaktive, derart beeinflussen, daß sie in die jeweils gewünschten Stoffströme übertreten, also beispielsweise in das Lithium-Konzentrat oder in die an Lithium abgereicherte Borsäurerefraktion. Zur Erhöhung der Trennwirksamkeit, insbesondere in Lösungen mit niedrigen Konzentrationen, können die Zellen zwischen den Membranen mit Ionenaustauschern (Kationen-, Anionen- oder Mischbettaustauscherharzen) gefüllt werden. Die Erfindung ist aber auch ohne Ionenaustauscher vorteilhaft verwendbar und kommt mit wenigen Kreislaufströmen aus.

Die Vorteile der Erfindung bestehen darin, daß mittels der Membranelektrolyse das überschüssige Bor auf physikalischem Wege aus dem Primärkühlkreis entfernt und isoliert werden kann, das Verfahren im Gegensatz zum diskontinuierlich betriebenen Ionenaustausch kontinuierlich abläuft und dadurch eine sehr konstante Bor-Konzentration im Kühlmittel eingehalten werden kann, kein Sekundärabfall entsteht und die Bor-Rückgewinnung zu erheblichen Einsparungen bei Chemikalien- und Entsorgungskosten führt. Es können Produkte in hoher Reinheit und Konzentration erhalten werden, Bor mit mehr als 7000 mg/kg, wobei $^7$Li und Bor nicht gleichzeitig entzogen werden müssen, sondern nach Wahl abtrennbar sind.

Die folgenden Ausführungsbeispiele der Erfindung lassen weitere vorteilhafte Merkmale und Besonderheiten erkennen, die anhand der schematischen Darstellung in den Zeichnungen im folgenden näher beschrieben und erläutert werden.

Es zeigen:

| Fig. 1 | ein Prinzipbild einer erfindungsgemäßen Membranelektrolyseanlage, |
|---|---|
| Fig. 2 | ein schematisches Bild der Vorgänge in dem Membranelektrolysemodul beim Lithiumentzug, |
| Fig. 3 | ein schematisches Bild der Vorgänge in einem Membranelektrolysemodul beim Borsäureentzug, |
| Fig. 4 | ein schematisches Bild eines Membranelektrolysemoduls mit einer für den Lithiumentzug geeigneten Stapelfolge mit alternierender Anordnung von Anoden, kationenselektiven Austauschermembranen und Kathoden, |
| Fig. 5 | ein schematisches Bild eines Membranelektrolysemoduls mit einer für den Lithiumentzug geeigneten Stapelfolge mit bipolarer Elektrode, |
| Fig. 6 | Einzelheiten zu einer ersten Ionenaustauschermembran, |
| Fig. 7 | Einzelheiten zu einer zweiten Ionenaustauschermembran, |
| Fig. 8 | Einzelheiten zu anderen Ionenaustauschermembranen, und |
| Fig. 9 bis 12 | experimentelle Ergebnisse. |

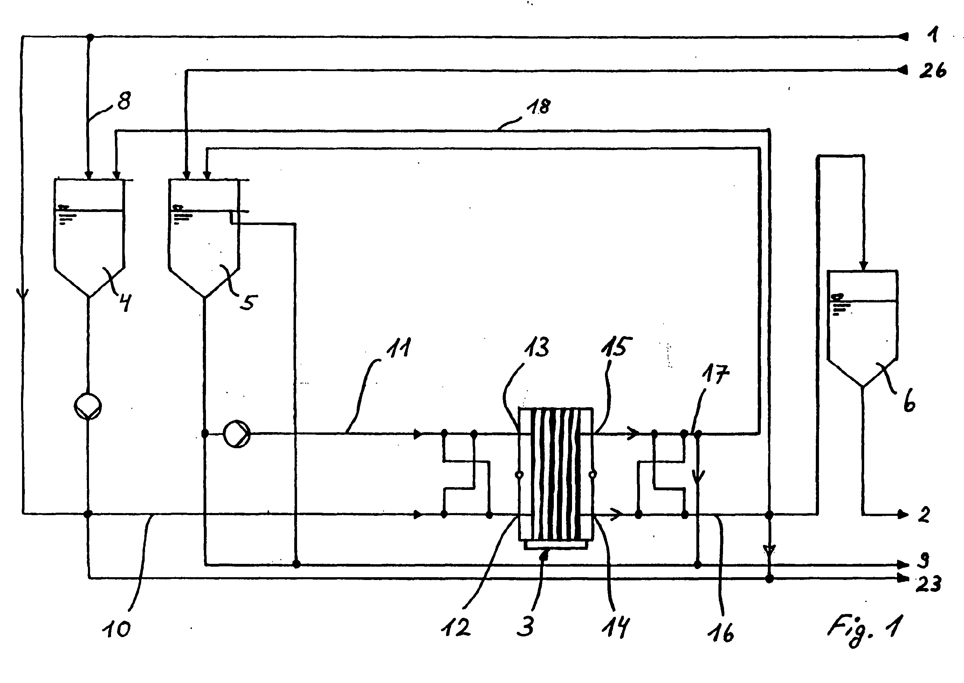

Die Fig. 1 zeigt eine erfindungsgemäße Vorrichtung zur Durchführung des erfindungsgemäßen Verfahrens zum Abtrennen von Bor aus dem Primärkühlkreis eines Kernkraftwerks. Das Kühlwasser wird dem Primärkühlkreis entnommen und über den Kühlwasservorlauf 1 der Elektrolyseanlage zugeführt. Das an Borsäure abgereicherte Kühlwasser wird über den Kühlwasserrücklauf 2 wieder in den Primärkühlkreis zurückgespeist. Das Kernstück der Anlage ist ein Membranelektrolysemodul 3 mit einer großen Anzahl von Zellen, die eine insgesamt große Membranoberfläche bilden. Das zu behandelnde Kühlwasser wird über den Diluateinlauf 10 dem Elektrolysemodul 3 zugeführt. Der Diluateinlauf 10 wird entweder unmittelbar von dem Kühlwasservorlauf 1 gespeist, oder das Kühlwasser wird erst über einen Zulauf 8 einem Diluatvorlagebehälter 4 und von dort dem Elektrolysemodul 3 über den Diluateinlauf 10 zugeführt.

Das Elektrolysemodul 3 ist prinzipiell wie folgt aufgebaut. Ein Modul besteht aus einer sich wiederholenden Folge von Anode, Abstandhalter, kationenselektiver bzw. anionenselektiver Membran, Abstandhalter, Kathode, Abstandhalter, kationenselektiver bzw. anionenselektiver Membran, Abstandhalter usw. Die Abstandhalter bestehen aus Polypropylen, haben eine Dicke von ca. 1 mm und sorgen damit für einen definierten Abstand zwischen den Membranen und bilden Strömungskanäle entlang der Membranen für den Diluat- und den Konzentratkreislauf. Die effektive Fläche einer Membran und einer Elektrode beträgt ca. 15 cm x 47 cm. Die Elektroden bestehen aus Titan und ihre Oberfläche ist mit Edelmetalloxiden (Pt, Ir) dotiert. Der gesamte Stapel wird zwischen zwei Rahmen durch Zugstangen zusammengepreßt. Durchführungen an beiden Rahmen erlauben den Anschluß der verschiedenen Kreislaufleitungen. Die Elektroden werden zum Beispiel an seitlichen Durchführungen kontaktiert.

In dem Diluatauslauf 16 des Elektrolysemoduls 3 ist die Bor-Konzentration reduziert. Der Diluatauslauf 16 kann entweder direkt in den Kühlwasserrücklauf 2 münden oder, wie im dargestellten Beispielsfall, vorzugsweise in einem Produktvorlagebehälter 6 zwischengespeichert werden.

Der Konzentrateinlauf 11 des Elektrolysemoduls 3 wird von einem Konzentratvorlagebehälter 5 gespeist, in den aus dem Elektrolysemodul 3 am Konzentratauslauf 17 austretendes Konzentrat zurückgeführt wird. Das Konzentrat kann alternativ oder parallel auch mittels des Konzentratabzugs 9 von dem Konzentratauslauf 17 oder aus dem Konzentratvorlagebehälter 5 abgezogen werden. Der Konzentratvorlagebehälter 5 kann zum Anfahren der Anlage über den Deionatzulauf 26 gefüllt werden. Beim Lithiumentzug kann das Deionat dabei zur Erhöhung der Leitfähigkeit mit Lithiumhydroxid versetzt sein.

Im Konzentratauslauf 17 ist die $^7$Li- bzw. Bor-Konzentration gegenüber dem Konzentrateinlauf 11 erhöht. Das auf diese Weise gewonnene Konzentrat bzw. das in dem Konzentratvorlagebehälter 5 angesammelte Konzentrat kann in der vorliegenden Form zwischengespeichert und bei Bedarf in den Primärkühlkreis zurückgeführt werden. Im Fall von Lastfolgebetrieb kann in dem Elektrolysemodul 3 oder dem Konzentratvorlagebehälter 5 zwischengespeichertes Bor durch einfaches Umkehren der Polung an den Elektroden dem Primärkühlkreis zugesetzt werden. Alternativ kann das Konzentrat auch mit weiteren Verfahren, beispielsweise mit allen gängigen Eindampfungs- und Trocknungsverfahren weiter an Borsäure angereichert werden.

Um die Membranen des Membranelektrolysemoduls 3 vor dem Zusetzen durch etwa vorhandene kolloidale Verunreinigung oder andere gelöste Stoffe zu schützen, ist es vorteilhaft, die an dem Elektrolysemodul anliegende Elektrolysespannung von Zeit zu Zeit umzupolen, wobei auch der Durchfluß von Diluat und Konzentrat in dem Elektrolysemodul 3 gewechselt wird. Durch regelmäßiges Umpolen der angelegten Spannung bei gleichzeitigem Umschalten der Transportrichtung der durchströmenden Medien kann einem Zusetzen der Membranen entgegengewirkt werden, ohne daß bereits entzogenes Bor verlorengeht. Teilchen und Stoffe, die sich eventuell auf den Membranen abgesetzt haben, lösen sich ab und werden mit dem Strom abtransportiert.

Das elektrische Umpolen der Elektrolysespannung erfolgt mittels einer elektronischen Schaltung. Die begleitende Umschaltung der Durchflußrichtung erfolgt mittels in Fig. 1 nicht dargestellter Steuerventile. In einer ersten Polung ist der Diluateinlauf 10 mit einem ersten Einlaß 12, der Diluatauslauf 16 mit einem ersten Auslaß 14, der Konzentrateinlauf 11 mit einem zweiten Einlaß 13 und der Konzentratauslauf 17 mit einem zweiten Auslaß 15 des Elektrolysemoduls 3 verbunden. Bei umgekehrter Polung wird mittels des skizzierten Leitungsnetzes und der nicht dargestellten Steuerventile der Diluateinlauf 10 mit dem zweiten Einlaß 13, der Diluatauslauf 16 mit dem zweiten Auslaß 15, der Konzentrateinlauf 11 mit dem ersten Einlaß 12 und der Konzentratauslauf 17 mit dem ersten Auslaß 14 des Elektrolysemoduls 3 verbunden.

Da die erfindungsgemäße Vorrichtung zum überwiegenden Teil in einem Bereich mit einem geringen Druckniveau arbeitet, können die Leitungen zwischen dem Primärkühlkreis und dem Elektrolysemodul 3 und/oder die Leitungen in der Anlage selbst nicht nur aus Stahl, sondern vorteilhafterweise überwiegend aus Kunststoff bestehen und damit kostengünstiger als Metallrohre sein. Kunststoffrohre sind zudem resistent gegen die verwendeten Chemikalien und haben im Hinblick auf die bei der Elektrolyse eingesetzten elektrischen Spannungen Sicherheitsvorteile, da es nicht zu Spannungsverschleppungen kommen kann.

Die in Fig. 1 dargestellte Anlage kann in verschiedener Weise betrieben werden.

Die erfindungsgemäße Variante besteht darin, daß die Anlage im Chargenbetrieb arbeitet. Dabei wird eine Charge Kühlwasser dem Primärkühlkreis entnommen und dem Diluatvorlagebehälter 4 zugeführt. Aus dem Diluatvorlagebehälter 4 wird das Kühlwasser im Kreislauf über das Elektrolysemodul 3 in den Diluatvorlagebehälter 4 zurückzirkuliert, bis eine gewünschte Abreicherung an $^7$Li bzw. Bor erfolgt ist. Danach wird diese Charge über den Vorlageabzug 23 oder den Kühlwasserrücklauf 2 in den Primärkühlkreis zurückgespeist. Vorteilhafterweise wird zwischen aufeinanderfolgenden Chargen eine Umpolung des Elektrolysemoduls 3 vorgenommen. Diese Betriebsweise ist geeignet, um einzelne Chargen zu behandeln und die Anlage in den zwischenliegenden Zeiträumen entweder stillzusetzen oder Chargen, gegebenenfalls anderer Zusammensetzung oder mit der Zielrichtung, andere Substanzen abzutrennen, zu betreiben. Ein Vorteil des Chargenbetriebs besteht darin, daß die Elektrolyseeinheit selbst nicht mit dem Druck des Primärkühlwasserkreislaufs beaufschlagt wird, was unter Sicherheitsaspekten wünschenswert sein kann.

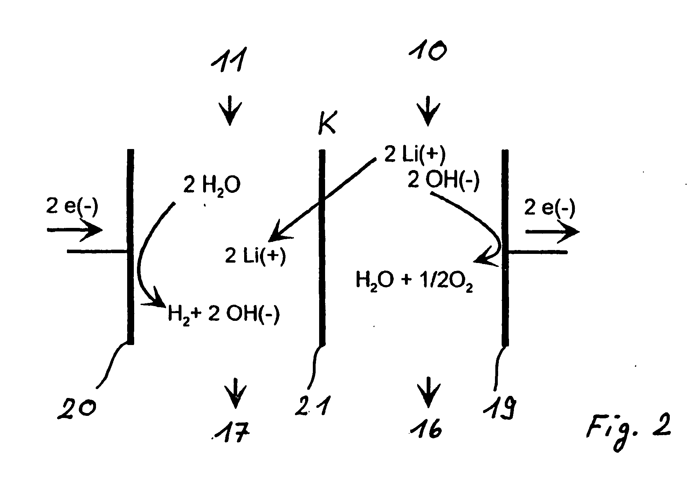

In Fig. 2 ist die prinzipielle Funktionsweise eines Elektrolysemoduls 3 in der Bauart einer Mehrfachzelle dargestellt. Zwischen der Anode 19 und der Kathode 20 liegt eine Spannung an, die ein elektrisches Feld mit der Stärke von ca. 20 V/cm erzeugt, wobei ein Strom von ca. 2 bis 3 mA/cm$^2$ fließt. Zwischen den Elektroden befindet sich eine kationenselektive Membran 21. Das mit Lithiumhydroxid und Borsäure versehene Kühlwasser wird als Diluatlösung über den Diluateinlauf 10 zwischen kationenselektiver Membran 21 und Anode 19 dem Elektrolysemodul 3 zugeführt. Unter dem Einfluß des elektrischen Feldes wandern die positiv geladenen Lithiumionen durch die Membran 21 in den Kathodenraum. Im Anodenraum findet folglich eine Verarmung an Lithiumionen statt, so daß der Diluatauslauf 16 weniger Lithium enthält als der Konzentrateinlauf 11. Die Ladungsneutralität auf beiden Seiten der Membran 21 wird durch Oxidation von Hydroxidionen an der Anode 19 und Reduktion von Hydroniumionen an der Kathode gewahrt. Die dabei entstehenden Gase Wasserstoff und Sauerstoff werden über eine Entgasungseinrichtung abgeführt.

Aus dieser Figur ist auch ersichtlich, daß die Membranelektrolyse nicht nur zum Abtrennen von $^7$Li verwendbar ist, sondern daß somit auch bei Austausch der kationenselektiven Membran 21 gegen eine anionenselektive Membran 22 und Vertauschen von Diluat- und Konzentratanschluß Borsäure bzw. Bor aus dem Primärkühlmittel abgetrennt werden kann.

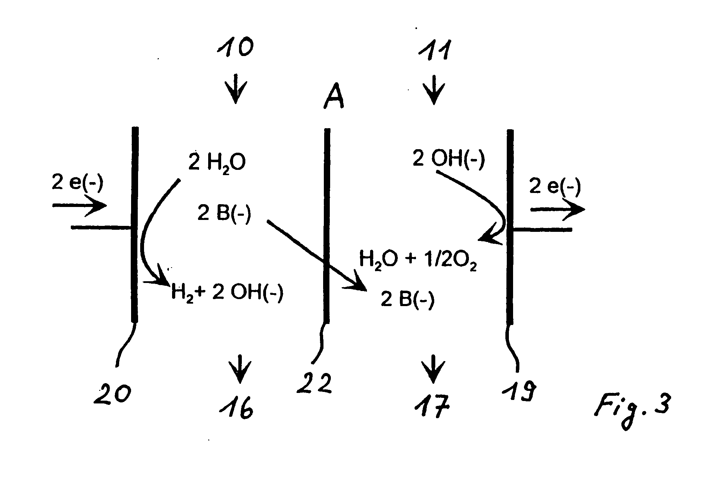

Schematisch ist dies in Fig. 3 dargestellt. Die Borsäure und Lithiumhydroxid enthaltende Diluatlösung läuft zwischen anionenselektiver Membran 22 und Kathode 20 dem Modul 3 zu. Unter den gegebenen chemischen Bedingungen findet partielle Dissoziation der Borsäure statt. Die anionischen Borationen wandern unter dem Einfluß des elektrischen Feldes durch die anionenselektive Membran 22 in den Anordenraum. Im Kathodenraum findet folglich eine Verarmung an Borsäure statt, so daß der Diluatauslauf 16 weniger Borsäure enthält als der Diluateinlauf 10. Umgekehrt enthält der Konzentratauslauf 17 eine höhere Konzentration an Borsäure als der Konzentrateinlauf 11. Aus Gründen der Ladungsneutralität finden an Anode 19 und Kathode 20 die bereits oben beschriebenen Oxidations- und Reduktionsreaktionen statt.

Mit der Erfindung kann auch Borsäure aus Leckagewasser rückgewonnen werden oder Borsäure aus flüssigen radioaktiven Abfällen zur Reduzierung der Abfallmenge abgetrennt werden. Auch das Abtrennen von Radionukliden und chemischen Verunreinigungen aus dem Primärkühlkreis, dem Kondensat, dem Speisewasser oder dem Zwischenkühlwasserkreis eines Kernkraftwerks, das nach dem Stand der Technik mit Ionenaustauschern durchgeführt wird, kann mittels der Membranelektrolyse erfolgen.

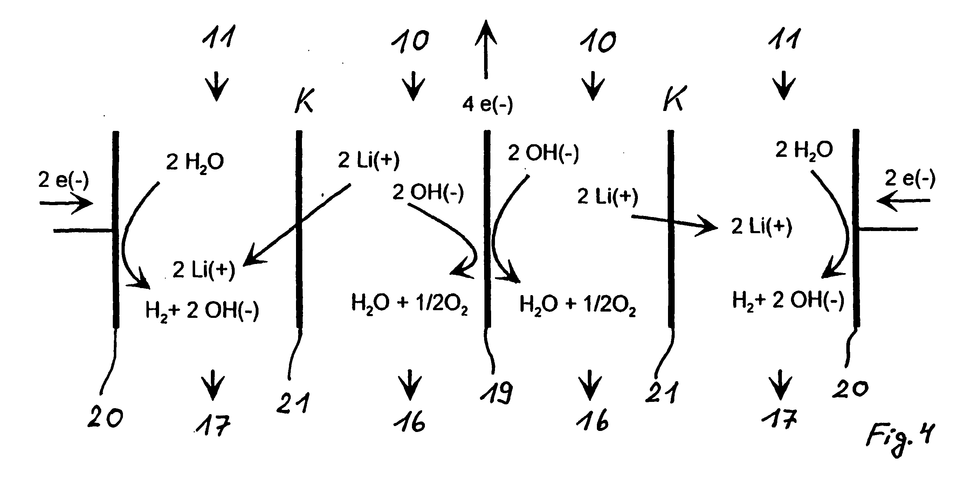

In Fig. 4 ist eine Stapelfolge mit alternierender Anordnung von Anoden 19, kationenselektiven Austauschermembranen 21 und Kathoden 20 für die Lithiumabtrennung schematisch dargestellt.

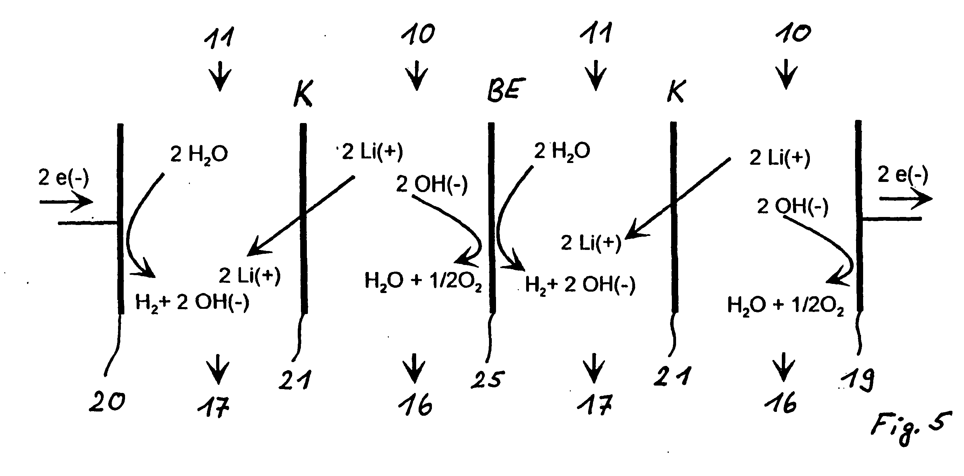

Fig. 5 zeigt die Stapelfolge eines Membranelektrolysemoduls 3 zum Lithiumentzug mit einer bipolaren Elektrode 25, zwei kationenselektiven Membranen 21 und der links bzw. rechts außen angeordneten Kathode 20 bzw. Anode 19. Die Diluatlösung 10 fließt den Kammern zu, die sich auf der der Anode 19 zugewandten Seite der kationenselektiven Membranen 21 befinden. Die Lithiumionen wandern nun unter dem Einfluß des elektrischen Feldes durch die kationenselektiven Membranen 21 auf die Konzentratseite des Systems. Aus Gründen der Elektroneutralität finden an der Anode 19 und Kathode 20 die bereits oben beschriebenen Vorgänge statt. An der bipolaren Elektrode 25, die den gleichen Aufbau wie eine Elektrode aber keine elektrische Kontaktierung nach außen hat, finden auf beiden Seiten unterschiedliche Vorgänge statt. Bei der in Fig. 5 gewählten Anordnung findet auf der linken Seite der bipolaren Elektrode 25 die Oxidation von Hydroxidionen statt, die dabei freiwerdenden Elektronen wandern durch die Elektrode und reduzieren auf der rechten Seite Hydroniumionen des Wassers zu Wasserstoff.

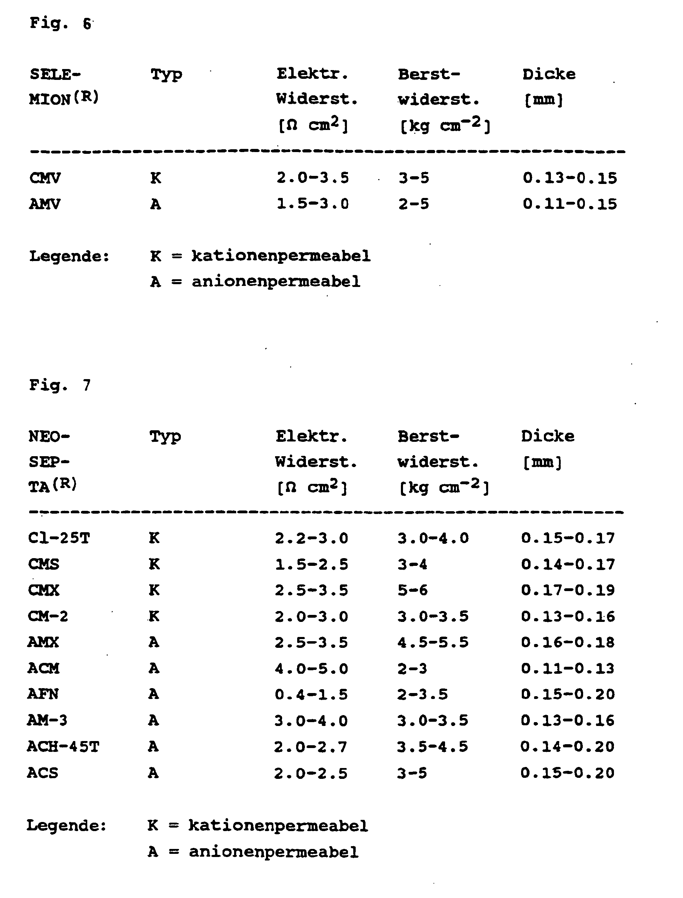

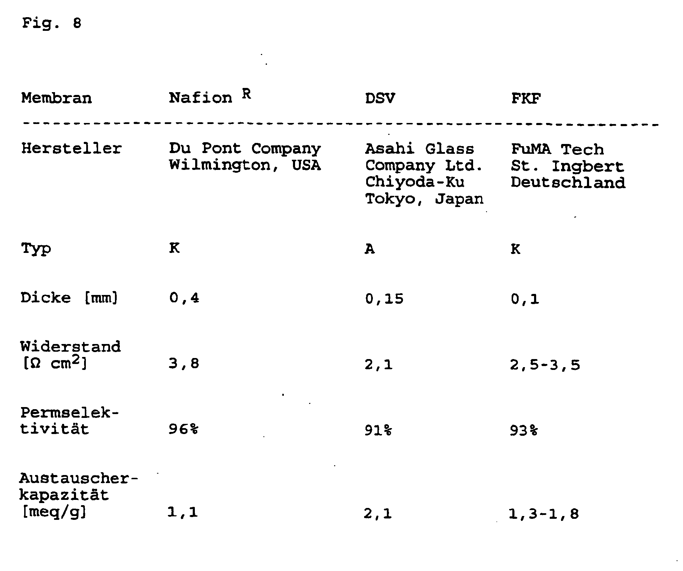

Die Figuren 6, 7 und 8 zeigen in Tabellen die technischen Daten der obengenannten Austauschermembranen. Die Kationenaustauschermembranen sind stark sauer ($-SO_3H$) und liegen in der H-Form vor, die Anionenaustauschermembranen sind stark basisch ($-NR_3^+$) und liegen in der $OH^-$-Form vor. Der elektrische Widerstand wurde mit 0.5 n NaCl-Lösung bei 25 °C bestimmt. CMX und AMX sind mechanisch verstärkt, AFN ist Fouling resistent und ACH-45T ist bei hohen pH-Werten einsetzbar. Bei der SELEMION[R] AMP handelt es sich um eine besonders alkalistabile Membran und bei der SELEMION[R] AMF um eine Fouling resistente.

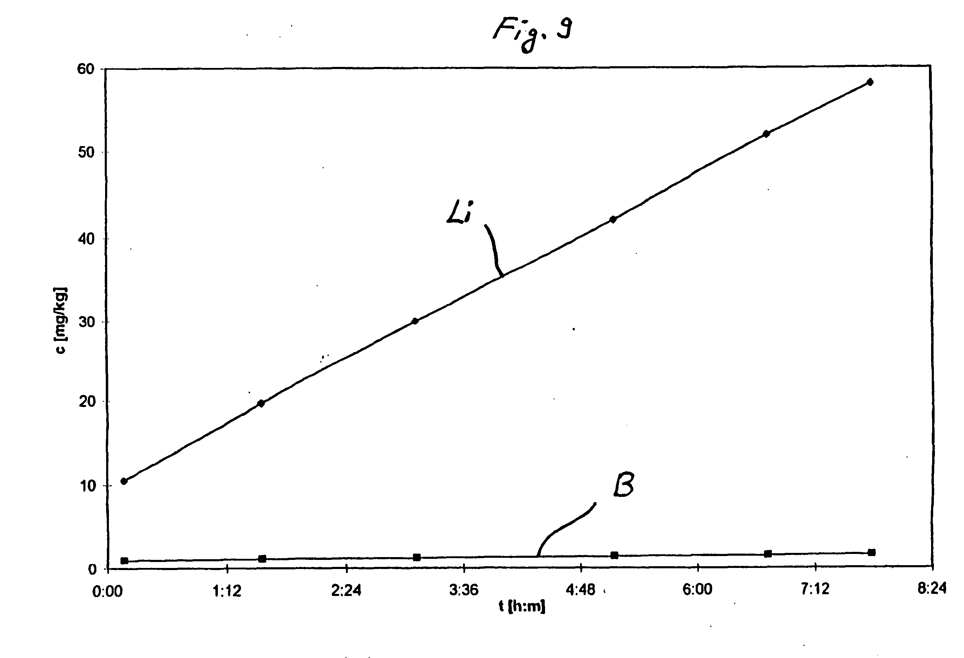

Die Figuren 9 bis 12 zeigen experimentelle Untersuchungen zu der Lithium-und/oder erfindungsgemäßenBorabtrennung an einer dem Primärkühlmittel in unterschiedlichen Zusammensetzungen entsprechenden Vorlage. Dargestellt ist jeweils die gemessene Konzentration c als Funktion der Zeit t. Beim Entzug von Lithium wurde die Elektrode der Vorlagenseite als Anode geschaltet und die beiden Flüssigkeitsräume durch eine Kationenaustauschermembran getrennt. Der Entzug von Lithium auf der Diluatseite wurde durch ständiges Nachdosieren kompensiert, wobei die Leitfähigkeit bei ca. 25 μS/cm lag. Neben einer geringen Lithiumkonzentration lag ein Überschuß an Borsäure, d.h. deutlich mehr Bor als Lithium vor, und es wurde geprüft, ob sich das Lithium selektiv abtrennen läßt. Es wurden dabei folgende Proben verwendet. In einer ersten Probe, die dem Beginn des Reaktorzyklus entspricht, betrug die Borkonzentration ca. 800 mg/kg und die Lithiumkonzentration ca. 2 mg/kg. In einer zweiten Probe, die dem Ende des Reaktorzyklus entspricht, betrug die Borkonzentration ca. 5 mg/kg und die Lithiumkonzentration ca. 1 mg/kg.

In Fig. 9 ist das Meßergebnis für die Lithiumrückgewinnung am Zyklusbeginn dargestellt. Die Konzentration an Borsäure auf der Konzentratseite liegt über die gesamte Versuchsdauer konstant bei 2 mg/kg, während die Lithiumkonzentration deutlich ansteigt. Dies bedeutet, daß sich Lithium selektiv abtrennen läßt, obwohl Borsäure unter den gegebenen Bedingungen (pH-Wert ca. 8) partiell dissoziiert und teilweise als Anion vorliegt. Dies führt jedoch nicht zu einer Anreicherung der Borsäure auf der Konzentratseite.

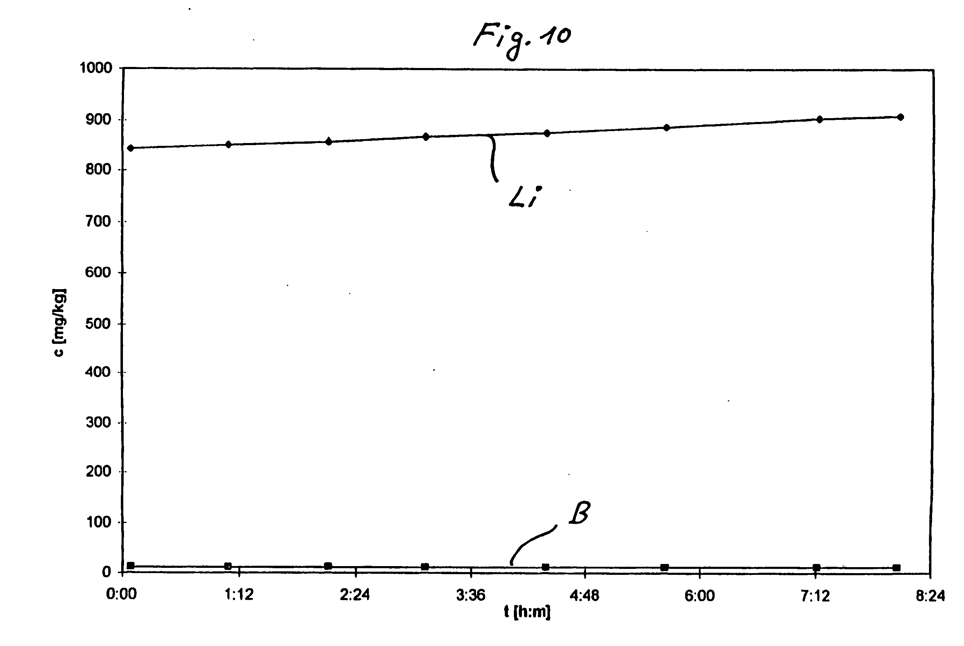

In der in Fig. 10 dargestellten Messung wurde überprüft, ob sich das rückgewonnene Lithium in einem möglichst kleinen Volumen speichern läßt. Hierzu ist es erforderlich, das Lithium hoch zu konzentrieren, wobei ca. 10000 mg/kg wünschenswert sind. Um die Versuchsdauer zu verkürzen, wurde in dieser Messung der Konzentratseite Lithium zugesetzt und die Konzentrationen wurden wie oben gemessen. Die Fig. 10 zeigt, daß die Lithiumkonzentration auf der Konzentratseite mit der Zeit stetig zunimmt, wogegen die Borkonzentration auf der Konzentratseite und der Vorlagenseite konstant bleiben. Durch Zusatz von weiterem Lithium auf der Konzentratseite konnte in den Experimenten gezeigt werden, daß die Lithiumanreicherung auf über 10000 mg/kg stattfindet. Mit dieser Konzentration ließe sich die bei dem Zyklus eines Reaktors rückzugewinnende Lithiummenge in einem Volumen von ca. 1 m$^3$ speichern.

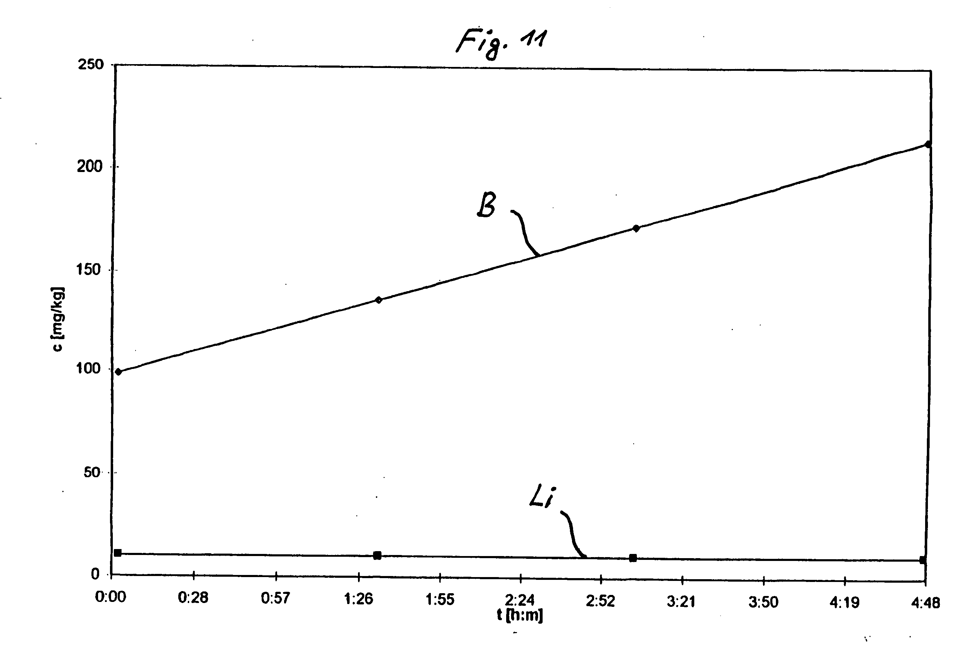

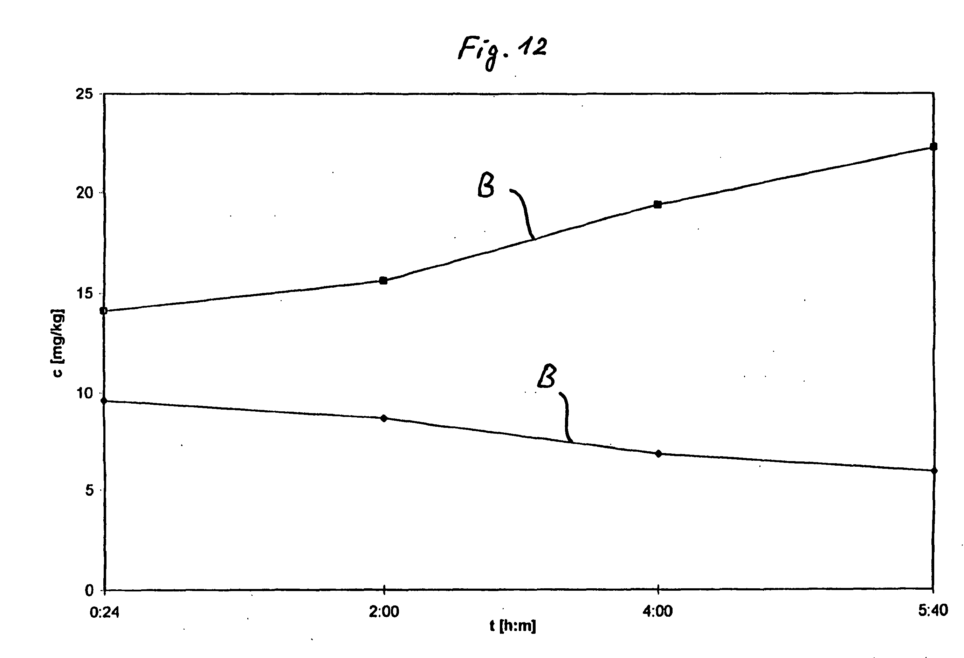

Für die Untersuchungen gemäß den Figuren 11 und 12 wurden die Kationenaustauschermembranen gegen eine Anionenaustauschermembran ausgetauscht und die Elektrode auf der Diluatseite wurde als Kathode geschaltet. In diesem Fall wird Bor auf die Konzentratseite transportiert, wogegen die Lithiumkonzentration auf der Konzentratseite unverändert bleibt. Die Fig. 11 zeigt die Ergebnisse mit der ersten Probe entsprechend dem Zyklusbeginn. Dargestellt ist die gleichbleibende Lithiumkonzentration auf der Konzentratseite sowie die stetig zunehmende Borkonzentration auf der Konzentratseite bei einer Anfangkonzentration auf der Vorlageseite von ca. 800 mg/kg.

Gegen Zyklusende nimmt die Borkonzentration im Primärkühlmittel auf wenige mg/kg ab und kann nach dem Stand der Technik nur durch Austauschen großer Volumina von Primärkühlmittel gegen Deionat weiter erniedrigt werden. In Fig. 12 ist dargestellt, daß sich auch beim sogenannten Stretch-Out-Betrieb bei niedriger Borkonzentration auf der Vorlageseite (untere Kurve in Fig. 12) mittels der Erfindung Bor auf der Konzentratseite (obere Kurve in Fig. 12) anreichern läßt.

Bezugszeichenliste

| | |
|---|---|
| 1 | Kühlwasservorlauf |
| 2 | Kühlwasserrücklauf |
| 3 | Elektrolysemodul |
| 4 | Diluatvorlagebehälter |
| 5 | Konzentratvorlagebehälter |
| 6 | Produktvorlagebehälter |
| 8 | Zulauf zu 4 |
| 9 | Konzentratabzug |
| 10 | Diluateinlauf |
| 11 | Konzentrateinlauf |
| 12 | erster Einlaß |
| 13 | zweiter Einlaß |
| 14 | erster Auslaß |
| 15 | zweiter Auslaß |
| 16 | Diluatauslauf |
| 17 | Konzentratauslauf |
| 18 | Diluatrückführung |
| 19 | Anode |
| 20 | Kathode |
| 21 | kationselektive Membran |
| 22 | anionselektive Membran |
| 23 | Vorlageabzug |
| 25 | bipolare Elektrode |
| 26 | Deionatzulauf |
| A | anionenselektive Membran |
| K | kationenselektive Membran |
| BE | bipolare Elektrode |
| c | Konzentration |
| t | Zeit |

**Patentansprüche**

1. Verfahren zum Abtrennen von Bor aus dem Primärkühlkreis eines Kernkraftwerks, insbesondere eines Druckwasserreaktors, bei dem Kühlwasser aus dem Primärkühlkreis entnommen und durch ein Elektrolysemodul (3) geleitet wird, in dem Bor mittels anionenselektiver Membranen (22) und Membranelektrolyse aus Kühlwasser abgetrennt wird, ohne daß gleichzeitig mittels neben den anionenselektiven Membranen (22) angeordneter kationenselektiver Membranen $^7$Li durch Membranelektrolyse abgetrennt wird, und aus dem Elektrolysemodul (3) austretendes Diluat in den Primärkühlkreis zurückgespeist wird,
**dadurch gekennzeichnet, daß**
es im Chargenbetrieb durchgeführt wird, wobei eine Charge Kühlwasser des Primärkühlkreises einem Diluatvorlagebehälter (4) zugeführt, Kühlwasser aus dem Diluatvorlagebehälter (4) im Kreislauf über das Elektrolysemodul (3) in den Diluatvorlagebehälter (4) zurück zirkuliert wird und nach Erreichen einer vorbestimmten Bor-Grenzkonzentration der Charge diese in den Primärkühlkreis zurückgespeist wird.

2. Verfahren nach Anspruch 1, **dadurch gekennzeichnet, daß** in dem Elektrolysemodul (3) kein Ionenaustauscherharz verwendet wird.

3. Verfahren nach einem der vorhergehenen Ansprüche, **dadurch gekennzeichnet, daß** die an dem Elektrolysemodul (3) anliegende Elektrolysespannung von Zeit zu Zeit umgepolt wird, wobei auch der Durchfluß von Diluat und Konzentrat in dem Elektrolysemodul (3) gewechselt wird.

**4.** Verfahren nach einem der vorhergehenden Ansprüche, **dadurch gekennzeichnet, daß** das Elektrolysemodul (3) zwischen aufeinanderfolgenden Chargen umgepolt wird.

**5.** Verfahren nach einem der vorhergehenden Ansprüche, **dadurch gekennzeichnet, daß** es im semikontinuierlichen Betrieb durchgeführt wird, wobei kontinuierlich dem Primärkühlkreis entnommenes Kühlwasser einem Diluatvorlagebehälter (4) zugeführt, dem Diluatvorlagebehälter (4) entnommenes Kühlwasser durch das Elektrolysemodul (3) geleitet und anschließend in den Primärkühlkreis zurückgespeist wird, wobei ein Teilstrom des aus dem Elektrolysemodul (3) austretenden Diluats im Kreislauf in den Diluatvorlagebehälter (4) zurück zirkuliert wird.

**6.** Verfahren nach einem der vorhergehenden Ansprüche, **dadurch gekennzeichnet, daß** aus dem Elektrolysemodul (3) austretendes Konzentrat einem Konzentratvorlagebehälter (5) zugeführt wird.

**7.** Verfahren nach einem der vorhergehenden Ansprüche, **dadurch gekennzeichnet, daß** Diluat vor der Zurückspeisung in den Primärkühlkreis in einem Produktvorlagebehälter (6) zwischengespeichert wird.

**8.** Verfahren nach einem der vorhergehenden Ansprüche, **dadurch gekennzeichnet, daß** aus dem Elektrolysemodul (3) austretendes Konzentrat weiter aufkonzentriert wird.

**9.** Verfahren nach einem der vorhergehenden Ansprüche, **dadurch gekennzeichnet, daß** Bor oder $H_3BO_3$ zwischengespeichert und bei Bedarf, ins-besondere im Lastfolgebetrieb mittels Umpolen des Elektrolysemoduls (3), in den Primärkühlkreis zurückgespeist wird.

**10.** Vorrichtung zum Abtrennen von Bor aus dem Primärkühlkreis eines Kernkraftwerks, insbesondere eines Druckwasserreaktors, mittels eines Verfahrens nach einem der Ansprüche 1 bis 9, die ein Elektrolysemodul (3) aufweist, durch das aus dem Primärkühlkreis entnommenes Kühlwasser leitbar und in dem Bor mittels anionenselektiver Membranen (22) und Membranelektrolyse aus Kühlwasser abtrennbar ist, ohne daß gleichzeitig mittels neben den anionenselektiven Membranen (22) angeordneter kationenselektiver Membranen $^7$Li durch Membranelektrolyse abgetrennt wird, wobei aus dem Elektrolysemodul (3) austretendes Diluat in den Primärkühlkreis zurückspeisbar ist, **dadurch gekennzeichnet, dass** sie einen Diluatvorlagebehälter (4) aufweist, aus welchem dem Primärkühlkreis entnommenes Kühlwasser dem Elektrolysemodul (3) zuführbar ist.

**11.** Vorrichtung nach Anspruch 10, **dadurch gekennzeichnet, daß** sie einen Konzentratvorlagebehälter (5) aufweist, dem aus dem Elektrolysemodul (3) austretendes Konzentrat zuführbar ist.

**12.** Vorrichtung nach einem der Ansprüche 10 bis 11, **dadurch gekennzeichnet, daß** sie einen Produktvorlagebehälter (6) aufweist, in dem Diluat vor der Zurückspeisung in den Primärkühlkreis zwischenspeichbar ist.

**13.** Vorrichtung nach einem der Ansprüche 10 bis 12, **dadurch gekennzeichnet, daß** das Elektrolysemodul (3) bipolare Elektroden (25) aufweist.

**14.** Vorrichtung nach Anspruch 13, **dadurch gekennzeichnet, daß** das Elektrolysemodul (3) eine alternierende Folge von Anionenaustauschermembranen (22) und bipolaren Elektroden (25) aufweist.

**15.** Vorrichtung nach einem der Ansprüche 10 bis 14, **dadurch gekennzeichnet, daß** die Membranen des Elektrolysemoduls (3) aus Kunststoffilmen mit eingebetteten ionischen Gruppen bestehen.

**16.** Vorrichtung nach einem der Ansprüche 10 bis 15, **dadurch gekennzeichnet, daß** die Kühlwasserleitungen zwischen dem Primärkühlkreis und dem Elektrolysemodul (3) und/oder die Leitungen in der Vorrichtung überwiegend aus Kunststoff bestehen.

**17.** Vorrichtung nach einem der Ansprüche 10 bis 16, **dadurch gekennzeichnet, daß** sie eine Stufe zum Konzentrieren des Konzentrats aufweist.

**18.** Vorrichtung nach einem der Ansprüche 10 bis 17, **dadurch gekennzeichnet, daß** sie einen Speicher zum Speichern von Bor oder $H_3BO_3$ aufweist.

**Claims**

1. A method for separating boron from the primary cooling circuit of a nuclear power station, in particular a pressurised water reactor,

   wherein cooling water is removed from the primary cooling circuit and conveyed through an electrolysis module (3), in which boron is separated from the cooling water by means of anion-selective membranes (22) and membrane electrolysis, without simultaneously $^7$Li being separated by membrane electrolysis with cation-selective membranes disposed beside the anion-selective membranes (22), and diluate emerging from the electrolysis module (3) is fed back into the primary cooling circuit,

   **characterised in that**

   it is performed in the charge operation, wherein a charge of cooling water of the primary cooling circuit is fed to a diluate receiver tank (4), cooling water is circulated in the circuit from the diluate receiver tank (4) via the electrolysis module (3) back into the diluate receiver tank (4) and, after a predetermined boron threshold concentration of the charge has been reached, the latter is fed back into the primary cooling circuit.

2. The method according to claim 1, **characterised in that** no ion exchange resin is used in the electrolysis module (3).

3. The method according to any one of the preceding claims, **characterised in that** the polarity of the electrolysis voltage applied to the electrolysis module (3) is reversed from time to time, the throughflow of diluate and concentrate in electrolysis module (3) also being changed.

4. The method according to any one of the preceding claims, **characterised in that** the polarity of the electrolysis module (3) is reversed between successive charges.

5. The method according to any one of the preceding claims, **characterised in that** it is performed in the semi-continuous operation, wherein cooling water removed continuously from the primary cooling circuit is fed to a diluate receiver tank (4), cooling water removed from the diluate receiver tank (4) is conveyed through the electrolysis module (3) and then fed back into the primary cooling circuit, wherein a partial flow of the diluate emerging from the electrolysis module (3) is circulated in the circuit back into the diluate receiver tank (4).

6. The method according to any one of the preceding claims, **characterised in that** concentrate emerging from the electrolysis module (3) is fed to a concentrate receiver tank (5).

7. The method according to any one of the preceding claims, **characterised in that**, before being fed back into the primary cooling circuit, diluate is temporarily stored in a product receiver tank (4).

8. The method according to any one of the preceding claims, **characterised in that** concentrate emerging from the electrolysis module (3) is further concentrated.

9. The method according to any one of the preceding claims, **characterised in that** boron or $H_3BO_3$ is temporarily stored and, when needed, especially in the load follow operation, is fed back into the primary cooling circuit by reversing the polarity of the electrolysis module (3).

10. Device for separating boron from the primary cooling circuit of a nuclear power station, in particular a pressurised water reactor, with a method according to any one of claims 1 to 9, wherein the device comprises an electrolysis module (3), through which cooling water removed from the primary cooling circuit can be conveyed and in which boron can be separated from the cooling water by means of anion-selective membranes (22) and membrane electrolysis, without simultaneously $^7$Li being separated by membrane electrolysis with cation-selective membranes disposed beside the anion-selective membranes (22), wherein diluate emerging from the electrolysis module (3) can be fed back into the primary cooling circuit, **characterised in that** it comprises a diluate receiver tank (4), from which cooling water removed from the primary cooling circuit can be fed to the electrolysis module (3).

11. The device according claim 10, **characterised in that** it comprises a concentrate receiver tank (5), to which concentrate emerging from the electrolysis module (3) can be supplied.

12. The device according to any one of claims 10 to 11, **characterised in that** it comprises a product receiver tank (6), in which diluate can be temporarily stored before being fed back into the primary cooling circuit.

**13.** The device according to any one of claims 10 to 12, **characterised in that** the electrolysis module (3) comprises bipolar electrodes (25).

**14.** The device according to claim 13, **characterised in that** the electrolysis module (3) comprises an alternating sequence of anion exchange membranes (22) and bipolar electrodes (25).

**15.** The device according to any one of claims 10 to 14, **characterised in that** the membranes of the electrolysis module (3) comprise plastic films with embedded ionic groups.

**16.** The device according to any one of claims 10 to 15, **characterised in that** the cooling water lines between the primary cooling circuit and the electrolysis module (3) and/or the lines in the device are predominantly made of plastic.

**17.** The device according to any one of claims 10 to 16, **characterised in that** it comprises a stage for the concentration of the concentrate.

**18.** The device according to any one of claims 10 to 17, **characterised in that** it comprises a storage unit for the storage of boron or $H_3BO_3$.

**Revendications**

**1.** Procédé pour séparer le bore du circuit de refroidissement primaire d'une centrale nucléaire, en particulier d'un réacteur à eau pressurisée,
selon lequel de l'eau de refroidissement est prélevée du circuit de refroidissement primaire et conduite à travers un module d'électrolyse (3) dans lequel le bore est séparé de l'eau de refroidissement au moyen de membranes sélectives anioniques (22) et par électrolyse à membranes, sans que du $^7$Li soit séparé en même temps par électrolyse à membranes au moyen de membranes sélectives cationiques disposées à côté des membranes sélectives anioniques (22), et le diluat sortant du module d'électrolyse (3) est réinjecté dans le circuit de refroidissement primaire, **caractérisé en ce**
**qu'**il est exécuté par lots, un lot d'eau de refroidissement du circuit de refroidissement primaire étant amené à un réservoir collecteur de diluat (4), de l'eau de refroidissement provenant du réservoir collecteur de diluat (4) étant ramenée en circuit fermé dans le réservoir collecteur de diluat (4) via le module d'électrolyse (3) et, après atteinte d'une concentration limite prédéterminée du lot en bore, celui-ci est réinjecté dans le circuit de refroidissement primaire.

**2.** Procédé selon la revendication 1, **caractérisé en ce qu'**aucune résine échangeuse d'ions n'est utilisée dans le module d'électrolyse (3).

**3.** Procédé selon une des revendications précédentes, **caractérisé en ce que** la tension d'électrolyse appliquée au module d'électrolyse (3) est inversée de temps en temps, la circulation de diluat et de concentrat dans le module d'électrolyse (3) s'inversant aussi.

**4.** Procédé selon une des revendications précédentes, **caractérisé en ce que** la polarité du module d'électrolyse (3) est inversée entre deux lots successifs.

**5.** Procédé selon une des revendications précédentes, **caractérisé en ce qu'**il est exécuté en mode semi-continu, étant donné que continuellement de l'eau de refroidissement prélevée du circuit de refroidissement primaire est amenée à un réservoir collecteur de diluat (4), de l'eau de refroidissement prélevée du réservoir collecteur de diluat (4) est conduite à travers le module d'électrolyse (3) et ensuite réinjectée dans le circuit de refroidissement primaire, un courant partiel du diluat sortant du module d'électrolyse (3) étant ramené en circuit fermé dans le réservoir collecteur de diluat (4).

**6.** Procédé selon une des revendications précédentes, **caractérisé en ce que** le concentrat sortant du module d'électrolyse (3) est amené à un réservoir collecteur de concentrat (5).

**7.** Procédé selon une des revendications précédentes, **caractérisé en ce que** du diluat est stocké temporairement dans un réservoir collecteur de produit (6) avant d'être réinjecté dans le circuit de refroidissement primaire.

**8.** Procédé selon une des revendications précédentes, **caractérisé en ce que** le concentrat sortant du module d'électrolyse (3) est concentré davantage.

**9.** Procédé selon une des revendications précédentes, **caractérisé en ce que** du bore ou du $H_3BO_3$ est stocké temporairement et, en cas de besoin, en particulier en mode suivi de charge, réinjecté dans le circuit de refroidissement primaire par inversion de polarité du module d'électrolyse (3).

**10.** Dispositif pour séparer le bore du circuit de refroidissement primaire d'une centrale nucléaire, en particulier d'un réacteur à eau pressurisée, au moyen d'un procédé selon une des revendications 1 à 9, qui présente un module d'électrolyse (3) à travers lequel peut être conduite de l'eau de refroidissement prélevée du circuit de refroidissement primaire et dans lequel le bore peut être séparé de l'eau de refroidissement au moyen de membranes sélectives anioniques (22) et par électrolyse à membranes, sans que du $^7Li$ soit séparé en même temps par électrolyse à membranes au moyen de membranes sélectives cationiques disposées à côté des membranes sélectives anioniques (22), le diluat sortant du module d'électrolyse (3) pouvant être réinjecté dans le circuit de refroidissement primaire, **caractérisé en ce qu'**il présente un réservoir collecteur de diluat (4) à partir duquel de l'eau de refroidissement prélevée du circuit de refroidissement primaire peut être amenée au module d'électrolyse (3).

**11.** Dispositif selon la revendication 10, **caractérisé en ce qu'**il présente un réservoir collecteur de concentrat (5) auquel peut être amené le concentrat sortant du module d'électrolyse (3).

**12.** Dispositif selon une des revendications 10 à 11, **caractérisé en ce qu'**il présente un réservoir collecteur de produit (6) dans lequel du diluat peut être stocké temporairement avant d'être réinjecté dans le circuit de refroidissement primaire.

**13.** Dispositif selon une des revendications 10 à 12, **caractérisé en ce que** le module d'électrolyse (3) présente des électrodes bipolaires (25).

**14.** Dispositif selon la revendication 13, **caractérisé en ce que** le module d'électrolyse (3) présente une suite alternante de membranes échangeuses d'anions (22) et d'électrodes bipolaires (25).

**15.** Dispositif selon une des revendications 10 à 14, **caractérisé en ce que** les membranes du module d'électrolyse (3) sont constituées de films en matière plastique avec groupes ioniques incorporés.

**16.** Dispositif selon une des revendications 10 à 15, **caractérisé en ce que** les conduites d'eau de refroidissement entre le circuit de refroidissement primaire et le module d'électrolyse (3) et/ou les conduites dans le dispositif sont principalement réalisées en matière plastique.

**17.** Dispositif selon une des revendications 10 à 16, **caractérisé en ce qu'**il présente un étage de concentration du concentrat.

**18.** Dispositif selon une des revendications 10 à 17, **caractérisé en ce qu'**il présente un réservoir pour le stockage de bore ou de $H_3BO_3$.

Fig. 1

EP 1 677 315 B1

Fig. 2

Fig. 3

EP 1 677 315 B1

Fig. 4

EP 1 677 315 B1

11
↓

10
↓

11
↓

10
↓

K

BE

K

2 e(-) →

2 $H_2O$

2 Li(+)

2 $H_2O$

2 Li(+)

2 e(-) →

2 OH(-)

2 Li(+)

2 OH(-)

2 Li(+)

$H_2$ + 2 OH(-)

$H_2O$ + 1/2$O_2$

$H_2$ + 2 OH(-)

$H_2O$ + 1/2$O_2$

20

↓
17

21

↓
16

25

↓
17

21

↓
16

19

Fig. 5

Fig. 6

| SELE-MION(R) | Typ | Elektr. Widerst. [Ω cm²] | Berst-widerst. [kg cm⁻²] | Dicke [mm] |
|---|---|---|---|---|
| CMV | K | 2.0-3.5 | 3-5 | 0.13-0.15 |
| AMV | A | 1.5-3.0 | 2-5 | 0.11-0.15 |

Legende: K = kationenpermeabel
A = anionenpermeabel

Fig. 7

| NEO-SEP-TA(R) | Typ | Elektr. Widerst. [Ω cm²] | Berst-widerst. [kg cm⁻²] | Dicke [mm] |
|---|---|---|---|---|
| Cl-25T | K | 2.2-3.0 | 3.0-4.0 | 0.15-0.17 |
| CMS | K | 1.5-2.5 | 3-4 | 0.14-0.17 |
| CMX | K | 2.5-3.5 | 5-6 | 0.17-0.19 |
| CM-2 | K | 2.0-3.0 | 3.0-3.5 | 0.13-0.16 |
| AMX | A | 2.5-3.5 | 4.5-5.5 | 0.16-0.18 |
| ACM | A | 4.0-5.0 | 2-3 | 0.11-0.13 |
| AFN | A | 0.4-1.5 | 2-3.5 | 0.15-0.20 |
| AM-3 | A | 3.0-4.0 | 3.0-3.5 | 0.13-0.16 |
| ACH-45T | A | 2.0-2.7 | 3.5-4.5 | 0.14-0.20 |
| ACS | A | 2.0-2.5 | 3-5 | 0.15-0.20 |

Legende: K = kationenpermeabel
A = anionenpermeabel

Fig. 8

| Membran | Nafion [R] | DSV | FKF |
| --- | --- | --- | --- |
| Hersteller | Du Pont Company Wilmington, USA | Asahi Glass Company Ltd. Chiyoda-Ku Tokyo, Japan | FuMA Tech St. Ingbert Deutschland |
| Typ | K | A | K |
| Dicke [mm] | 0,4 | 0,15 | 0,1 |
| Widerstand [$\Omega$ cm$^2$] | 3,8 | 2,1 | 2,5-3,5 |
| Permselek-tivität | 96% | 91% | 93% |
| Austauscher-kapazität [meq/g] | 1,1 | 2,1 | 1,3-1,8 |

Fig. 9

EP 1 677 315 B1

Fig. 10

EP 1 677 315 B1

Fig. 11

Fig. 12

**IN DER BESCHREIBUNG AUFGEFÜHRTE DOKUMENTE**

**In der Beschreibung aufgeführte Patentdokumente**

- DE 2830972 A
- DE 4026154 A1
- DE 4211266 A1
- DE 4211267 A1
- DE 4421126 A